# EUROPEAN PATENT APPLICATION

(11) **EP 2 215 939 A2**
(43) Date of publication of application: **11.08.2010**
(21) Application number: 09171336.2
(22) Date of filing: 25.09.2009
(51) Int. Cl.: A47J 31/44, A47J 31/60

(54) **Domestic appliance**

(30) Priority: 01.11.2008 GB 0820058
(71) Applicant: Dyson Technology Limited, Malmesbury, Wiltshire SN16 0RP (GB)
(72) Inventor: Vanderstegen-Drake, Mark Stamford, Malmesbury, Wiltshire SN16 0RP (GB); Upton, Robert Paul, Malmesbury, Wiltshire SN16 0RP (GB)
(74) Representative: Booth, Andrew Steven

(57) **Abstract**

Apparatus for foaming milk comprises a body (80) defining a foaming chamber (86), a nozzle (112) insertable into milk located in a milk container, a conduit arrangement (100, 104) for conveying milk to the foaming chamber from the nozzle, means (88) for drawing milk through the conduit arrangement to the foaming chamber, a foamed milk outlet (116) configured to return foamed milk to the container, a temperature sensor (124) for monitoring the temperature of milk being supplied to the foaming chamber, and a controller (60) arranged to terminate the drawing of milk along the nozzle depending on the monitored temperature.

## Description

The present invention relates to a coffee machine, and to apparatus for foaming milk.

Coffee machines are generally required to have the versatility to produce both "black" coffee beverages, such as espresso, and mixed milk and coffee beverages, such as cappuccino and macchiato. These mixed beverages are formed by adding foamed milk to espresso coffee. Therefore, it is becoming usual for coffee machines to include an apparatus for foaming milk for use in producing these mixed beverages.

A known coffee machine includes an apparatus for foaming milk which generates a flow of steam which is conveyed along a channel. The steam is generated from water supplied from a water container for storing water used in brewing espresso coffee within the coffee machine. The channel has a constricted portion leading to a mixing chamber. The mixing chamber is connected to an air supply conduit communicating with the ambient atmosphere, and to a milk supply conduit comprising a nozzle for immersion into milk located within a milk container. The steam increases in velocity, and thus reduces in pressure, as it passes along the constricted portion of the channel. As the steam enters the mixing chamber, a reduced pressure, or partial vacuum, is generated within the mixing chamber. The low pressure within the mixing chamber causes air and milk to be sucked into the mixing chamber from the air supply conduit and the milk supply conduit respectively. Within the mixing chamber, the milk and air are heated by, and mixed with, the steam to produce foamed milk. The foamed milk is conveyed from the mixing chamber to a milk outlet conduit, which may lead either to a dispensing spout from which the foamed milk can be dispensed into a black coffee beverage, or to a second nozzle from which the foamed milk is returned to the milk container.

The present invention provides apparatus for foaming milk, comprising a body defining a foaming chamber, a nozzle insertable into milk located in a milk container, a conduit arrangement for conveying milk to the foaming chamber from the nozzle, means for drawing milk through the conduit arrangement to the foaming chamber, a foamed milk outlet configured to return foamed milk to the container, a temperature sensor for monitoring the temperature of milk being supplied to the foaming chamber, and a controller arranged to terminate the drawing of milk along the nozzle depending on the monitored temperature.

By monitoring the temperature of the milk being supplied to the foaming chamber and terminating the drawing of milk along the nozzle depending on the monitored temperature, a foaming operation can be terminated when the milk within the container has reached a desired consistency irrespective of the volume of milk within the container.

The temperature sensor is preferably arranged to contact milk being drawn through the conduit arrangement so that it is highly responsive to a change in the temperature of the milk. The temperature sensor preferably comprises a thermistor located within the body.

The controller is configured to terminate the drawing of milk through the conduit arrangement when the monitored temperature is in the range from 50 to 70°C, more preferably when the monitored temperature is in the range from 60 to 70°C.

The use of a second nozzle to return foamed milk to the container can increase detrimentally the size of the apparatus, and can restrict the size and shape of the container to one which is able to accommodate both nozzles. In the preferred embodiment the foamed milk outlet is preferably substantially co-axial with the nozzle, and is preferably configured to return foamed milk to the container over the external periphery of the nozzle. Therefore the present invention also provides apparatus for foaming milk, comprising a body defining a foaming chamber, a nozzle insertable into milk located in a milk container, a conduit arrangement for conveying milk to the foaming chamber from the nozzle, means for drawing milk through the conduit arrangement to the foaming chamber, and a foamed milk outlet for returning foamed milk to the container over the external periphery of the nozzle.

By returning foamed milk to the container over the external periphery of the nozzle, only a single nozzle is required to be inserted into the milk to both convey milk to the foaming chamber and return foamed milk to the container. This can enable the foaming apparatus to be relatively compact. Furthermore, the return of milk to the container over the external periphery of the nozzle can be visually appealing, as during use the external surface of the nozzle will be "masked" by a stream of foamed milk returning to the milk container.

In the preferred embodiment the foamed milk outlet comprises a plurality of channels radially spaced from and extending along the conduit arrangement. These channels are preferably aligned parallel to each other, and parallel with the longitudinal axis of the nozzle so that a smooth flow of milk is returned to the container. The foamed milk outlet may comprise between three and eight channels located about the conduit arrangement. The channels preferably terminate at the lower surface of the body, and thus may be conveniently formed by machining or otherwise forming a plurality of slots extending from the lower surface of the body. In the preferred embodiment the foamed milk outlet comprises an annular channel for receiving foamed milk from the foaming chamber.

The body preferably comprises an upper portion, and a lower portion releasably retained by the upper portion and comprising the foamed milk outlet. This can enable the foamed milk outlet to be easily cleaned by removing the lower portion of the body, and running the lower portion of the body under a tap. A milk supply conduit of the conduit arrangement is preferably releasably retained by the lower portion of the body, preferably in a bore formed in the lower portion. The plurality of channels may thus be formed as a plurality of slots extending along the surface of this bore. The lower portion of the body is preferably formed from flexible material. The foaming chamber may be delimited by the upper portion and the lower portion of the body, and so may be readily cleaned by removing the lower portion of the body and wiping clean the surfaces of the two portions of the body.

The milk may be drawn from the milk container by a pump, but in the preferred embodiment the means for drawing milk along the milk supply conduit to the foaming chamber comprises a steam supply conduit for supplying steam to the foaming chamber. The steam supply conduit and the foaming chamber are preferably shaped so that milk is drawn into the foaming chamber by the Venturi effect as the steam enters the foaming chamber.

The body is preferably moveable between a stowed position and a deployed position for inserting the nozzle within milk located in a milk container.

A separate air supply conduit may be provided for supplying air to the foaming chamber, but in the preferred embodiment an air inlet for supplying air to the apparatus is preferably located in the conduit arrangement, preferably beneath the foamed milk outlet. As the inlet to the air supply conduit may become blocked, for example by dirt and solidified milk, in the preferred embodiment the apparatus comprises means for dislodging matter from the air inlet. The apparatus preferably comprises means for activating the cleaning device as the foaming device moves between the stowed position and the deployed position. As a result the dislodging means can be activated automatically each time the foaming device is moved from the stowed position to the deployed position when foamed milk is to be produced by the apparatus, and each time the foaming device is subsequently moved back to the stowed position for storage. This can enable the air inlet to be sufficiently clear from unwanted matter, such as dirt, solidified milk and other deposits, during the supply of air and milk to the foaming chamber that foamed milk of a repeatable, high quality can be produced by the apparatus. Therefore the present invention further provides apparatus for foaming milk, comprising:
a housing;
a foaming device movable relative to the housing between a stowed position and a deployed position, the foaming device comprising a foaming chamber, a steam supply conduit for supplying steam to the foaming chamber, a fluid supply conduit for supplying air and milk to the foaming chamber, and an air inlet from which air is supplied to the fluid supply conduit;
means for dislodging matter from the air inlet; and
means for activating the cleaning device as the foaming device moves between the stowed position and the deployed position.

The dislodging means is preferably mounted on the foaming device.

The dislodging means may be arranged to direct a pressurised stream of fluid, for example air or water, towards or on to the air inlet to dislodge matter therefrom. However in the preferred embodiment the dislodging means comprises a moveable cleaning member for dislodging matter from the air inlet. For example, the dislodging means may comprise a flexible member, such as a diaphragm, comprising an aperture defining the air inlet. In this case, the activating means may be arranged to engage the flexible member as the foaming device moves between the stowed position and the deployed position. This can cause the flexible member to flex, thereby dislodging matter from the air inlet. In the preferred embodiment, the dislodging means comprises a cleaning member which is moveable relative to the air inlet to dislodge matter therefrom. The cleaning member is preferably located partially within the air inlet during use of the apparatus. Consequently, dirt can accumulate within a substantially annular aperture located between the outer periphery of the moveable cleaning member and the inner periphery of the air inlet. This dirt can be dislodged from this aperture by the movement of the cleaning member relative to the air inlet. The activating means is preferably arranged to urge the cleaning member in a direction extending towards the air inlet to cause the matter to be dislodged from the air inlet. However, the activating means may be arranged to vibrate the cleaning member within the air inlet, or to move cleaning member in a curved or circular path within the air inlet, to dislodge matter from the air inlet.

The use of a cleaning member for dislodging matter from the air inlet can thus provide a relatively cheap and simple arrangement for unblocking the air inlet, and so the present invention also provides apparatus for foaming milk, comprising:
a housing; and
a foaming device movable relative to the housing between a stowed position and a deployed position, the foaming device comprising a foaming chamber, a steam supply conduit for supplying steam to the foaming chamber, a fluid supply conduit for supplying air and milk to the foaming chamber, an air inlet from which air is supplied to the fluid supply conduit, and an air inlet cleaning member;
the housing comprising means for moving the air inlet cleaning member as the foaming device moves between the stowed position and the deployed position to dislodge matter from the air inlet.

The cleaning member may be moved as the foaming device moves between the stowed position and the deployed position using one of a number of different techniques. For instance, a magnet or electromagnet may be located on the housing to move the cleaning member. In the preferred embodiment the means for moving the cleaning member comprises an abutment member for engaging the cleaning member as the foaming device moves between the stowed position and the deployed position. The foaming device is preferably slidably moveable relative to the housing, but alternatively it may be rotatable or pivotable relative to the housing.

The abutment member may be rigidly attached to the housing, or it may be integral therewith. At least one of the abutment member and the cleaning member may comprise a curved, angled or otherwise profiled surface for engaging the other of the abutment surface and the cleaning member so that the cleaning member moves smoothly relative to the air inlet.

The cleaning member is preferably pushed by the abutment member from a first position to a second position relative to the air inlet. A resilient member, preferably in the form of a spring, may be provided for biasing the cleaning member in a direction extending away from the air inlet, that is, towards the first position, so that the cleaning member is returned automatically to the first position once the cleaning member has become spaced from the abutment member.

The cleaning member may take any suitable form for dislodging matter from the air inlet. For example, the cleaning member may comprise a brush having flexible bristles. In the preferred embodiment, the cleaning member comprises a pin.

The present invention also provides a domestic appliance comprising apparatus as aforementioned, and which is preferably in the form of a coffee machine.

The present invention further provides a method of foaming milk, comprising inserting a nozzle of a milk supply conduit into milk located in a milk container, drawing milk from the container and conveying the drawn milk to a foaming chamber, returning foamed milk to the container from the foaming chamber, monitoring the temperature of milk being supplied to the foaming chamber, and terminating the drawing of milk along the milk supply conduit depending on the monitored temperature.

Features described above in connection with apparatus aspects of the invention are equally applicable to the method aspect of the invention, and vice versa.

An embodiment of the present invention will now be described, by way of example only, with reference to the accompanying drawings, in which:
Figure 1 is a perspective view of a domestic appliance, with apparatus for foaming milk in a stowed position;
Figure 2 is a schematic illustration of various components of the domestic appliance of Figure 1;
Figure 3 is a perspective view of the domestic appliance of Figure 1 with the apparatus for foaming milk in a deployed position;
Figure 4 is a side view of the apparatus for foaming milk, with a foaming device of the appliance in a deployed position;
Figure 5 is a cross-sectional view of the apparatus of Figure 4; and
Figure 6 is a cross-sectional view of part of the foaming device of Figure 5.

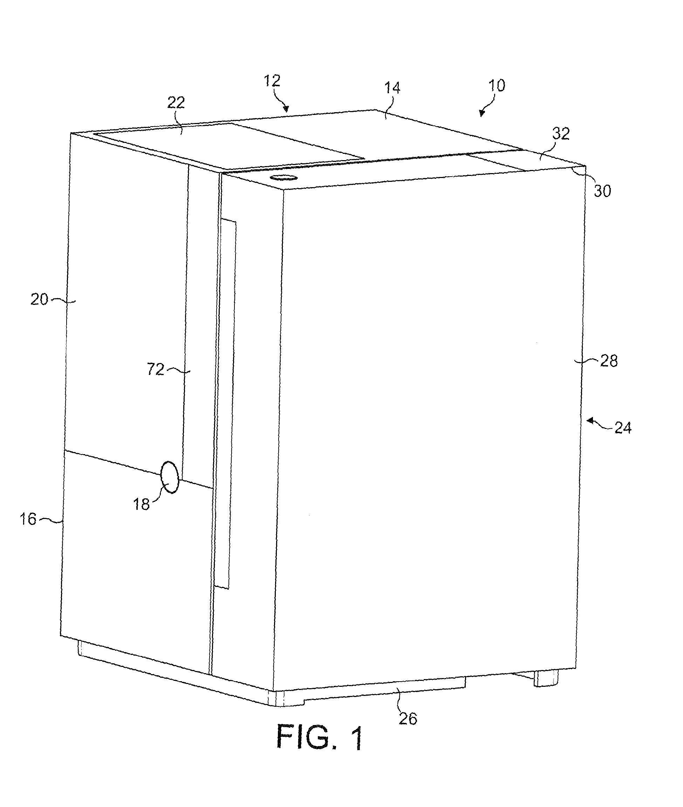

Figure 1 illustrates a domestic appliance. In this embodiment the domestic appliance is in the form of a coffee machine 10 that is suitable for domestic use in, for example, a kitchen environment. The coffee machine 10 has a substantially cuboid outer casing 12. The outer casing has an upper surface 14 and a front surface 16. A spout 18 is located in the front surface 16 of the outer casing 12. The spout 18 is moveable relative to the casing 12 between a stowed position, illustrated in Figure 1, in which the spout 18 is stored within the casing 12 and a deployed position in which the spout 18 dispenses coffee from the coffee machine 10. A more detailed description of the spout 18 can be found in co-pending application PCT/GB2008/001228.

An access door 20 is formed in the outer casing 12. The access door 20 forms a part of the front surface 16 of the casing 12 and is slidably openable between a stowed position, in which the access door 20 is flush with the front surface 16 of the casing 12, and a deployed position. The access door 20 is attached to an ingredient drawer which moves therewith for receiving a beverage ingredient (for example, coffee beans or pre-ground coffee) when the access door 20 is in its deployed position.

The coffee machine 10 comprises a user-operable control panel 22 located on the upper surface 14 of the casing 12. The control panel 22 may comprise a touch-sensitive screen or a plurality of buttons to enable the user to control the operation of the coffee machine 10. For example, the movement of the access door 20 and the spout 18 relative to the casing can be actuated using the control panel 22.

A water reservoir 24 is located adjacent the outer casing 12 and is attached thereto by a base portion 26. The water reservoir 24 has a substantially cuboid body 28 which may be formed from a transparent material such as a plastics material, or from an opaque plastics material. In this latter alternative the body 28 may be provided with a window to enable the user to see the volume of water within the water reservoir 24. An aperture 30 is formed in the upper end of the body 28 to enable the user to introduce water to the water reservoir 24. The aperture 30 is closed by a hinged lid 32 which is openable by a user. The lid 32 is shown in the closed position in Figure 1. The operation of the lid 32 is described in more detail in co-pending application GB 0723823.1 and will not be discussed any further here.

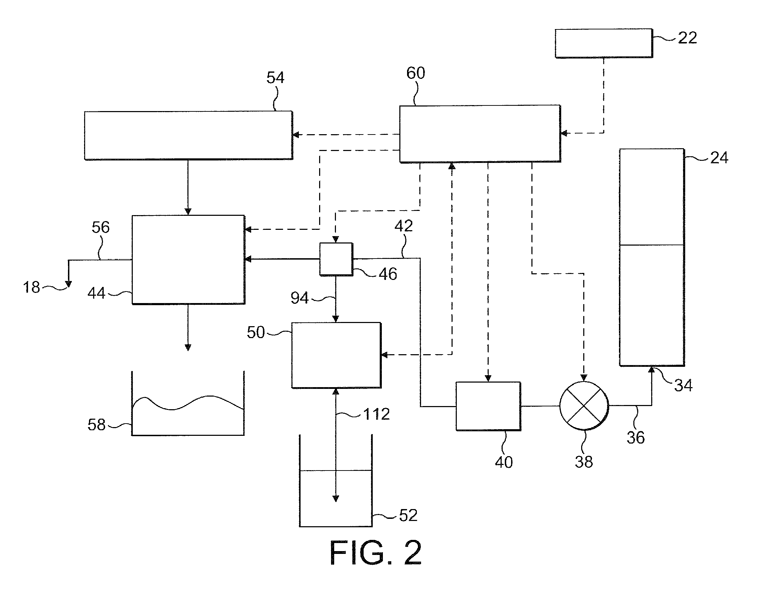

Figure 2 illustrates schematically various components of the coffee machine 10. A valve unit 34 connects the water reservoir 24 to the base portion 26. The valve unit 34 has a first portion located in the body 28 of the water reservoir 24 and a second portion located on the base portion 26. The water reservoir 24 is removable from the base portion 26 to enable the water reservoir 24 to be placed under a domestic water tap for filling. The water reservoir 24 can be released from the base portion 26 by pulling the water reservoir 24 upwardly away from the base portion 26. When this occurs, the first and second portions of the valve unit 34 are separated. This action automatically closes the valve unit 34, preventing leakage of water from the water reservoir 24.

A reservoir conduit 36 located in the base portion 26 connects the water reservoir 24 to a pump 38. The pump 38 is located within the outer casing 12 of the coffee machine 10. In this embodiment, the pump 38 is a solenoid pump. An inline heater element 40 is located downstream of the pump 38 for heating water drawn from the water reservoir 24 by the pump 38. The heater element 40 is arranged to heat the water passing therethrough to one of two different temperatures, a first temperature of around boiling point, and a second temperature in the range from 120 to 140°C to generate steam. A supply conduit 42 is located downstream of the heater element 40 and is arranged to supply the water, when heated to the first temperature, to a brewing assembly 44. A three-way valve 46 is located within the supply conduit 42 to selectively divert water, when heated to the second temperature, away from the brewing assembly 44 to apparatus 50 for foaming milk supplied thereto from a milk container 52 located alongside the coffee machine 10.

Ground coffee is supplied to the brewing assembly 44 by an ingredient dispenser 54. The ingredient dispenser 54 is located within the ingredient drawer so that beverage ingredients can be placed therein when the access door 20 is in the open position. The brewing assembly 44 is arranged to prepare a coffee beverage from the ground coffee and water at the first temperature which are supplied thereto by the ingredient dispenser 54 and the supply conduit 42 respectively.

A dispensing conduit 56 connects the brewing assembly to the spout 18 to supply the spout 18 with a prepared coffee beverage for dispense to a user. A waste grounds container 58 is provided below the brew chamber assembly 44. Waste coffee grounds are deposited into the waste grounds container 58 from the brewing assembly 44 following the completion of a beverage preparation by the coffee machine 10. The waste grounds container 58 may be located in, or form part of, a drawer of the outer casing 12 of the coffee machine 10 to allow the waste grounds container 58 to be accessed readily by the user for emptying.

A controller 60 is provided for controlling the operation of the coffee machine 10. The controller 60 is arranged to receive signals from the control panel 22, and to actuate the operation of the pump 36, heater element 38, three-way valve 40, brew chamber assembly 44, apparatus 50 and ingredient dispenser 54 in response thereto.

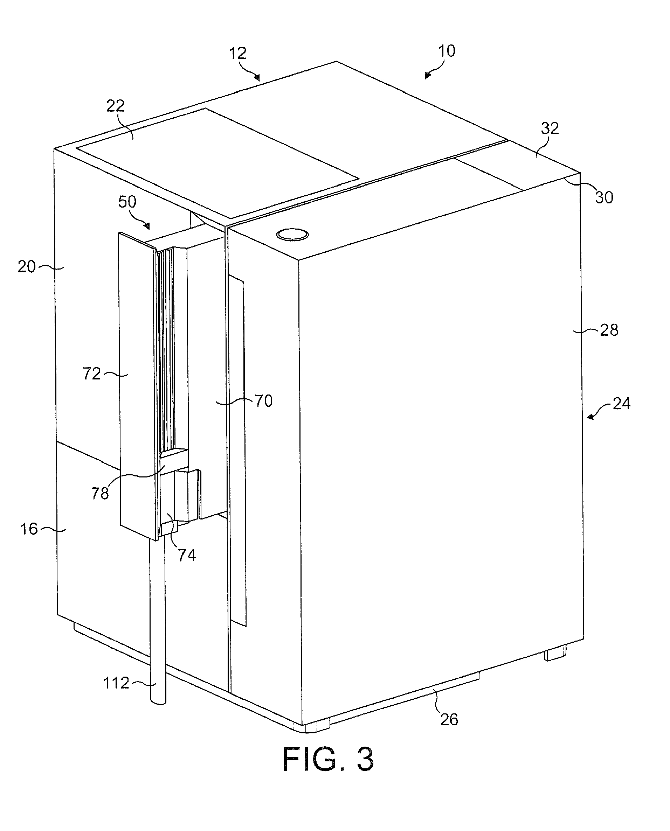

The apparatus 50 for foaming milk is illustrated in more detail in Figures 3 to 6. The apparatus 50 comprises a housing 70 which is moveable relative to the casing 12 between a stowed position, as illustrated in Figure 1, and a deployed position, as illustrated in Figure 3. The housing 70 has a front cover 72 which is flush with the front surface 16 of the casing 12 when the housing 70 is in its stowed position. The movement of the housing 70 from the stowed position to the deployed position may be affected by a solenoid mechanism which is actuated by pressing an appropriate button on the control panel 22. To return the housing 70 to the stowed position the user may simply push the front cover 72 of the housing 70 towards the casing 12 until the front cover 72 is flush with the front surface 16 of the casing 12.

The apparatus 50 comprises a foaming device 74 for forming foamed milk from milk, air and steam. The foaming device 74 is slidably moveable relative to the housing 70 between a stowed position in which the foaming device 74 is located substantially entirely within the housing 70, and a deployed position, as illustrated in Figure 3, in which part of the foaming device 74 protrudes from the lower surface 76 of the housing 70. A button 78 of a manually-operable sliding mechanism may be provided on one side of the housing 70 for allowing the user to slide the foaming device 74 between the stowed position and the deployed position when the housing 70 is in a deployed position. In this example the foaming device 74 is moveable substantially vertically relative to the housing 70.

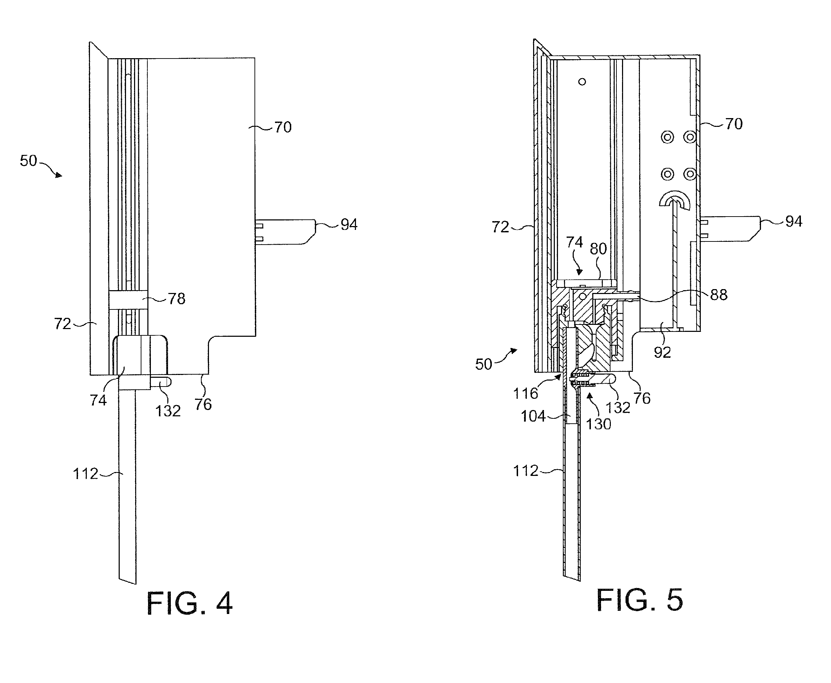

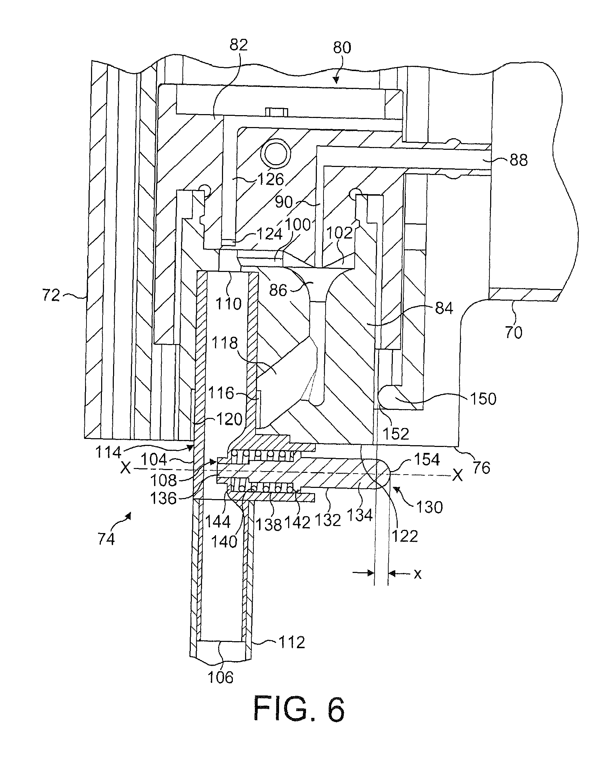

The foaming device 74 is illustrated in more detail in Figures 5 and 6. The foaming device 74 comprises a body 80 having an upper portion 82 formed from a rigid material, preferably a plastics material, and a lower portion 84 formed from a flexible material, preferably rubber. The lower portion 84 is releasably retained by the upper portion 82 so that the user can remove the lower portion 84 from the upper portion 82 for cleaning. The upper portion 82 and the lower portion 84 of the body 80 together define a foaming chamber 86 within which steam heats milk and air to form heated, foamed milk. The upper portion 82 of the body 80 comprises a steam supply conduit 88 for supplying steam to the foaming chamber 86. With reference to Figure 6, the steam supply conduit 88 has a constricted portion 90 from which steam enters the foaming chamber 86. The steam supply conduit 88 is arranged to receive steam from a tube (not shown) extending within chamber 92 located within the housing 70. This tube is connected at one end to a steam inlet conduit 94 for conveying steam from the three-way valve 46 to the housing 70 and at the other end to the steam supply conduit 88.

The upper portion 82 and the lower portion 84 of the body 80 together define a fluid supply conduit 100 for supplying milk and air to the foaming chamber 86. The fluid supply conduit 100 has an outlet 102 for conveying milk and air into the foaming chamber 86. The outlet 102 is located about the constricted portion 90 of the steam supply conduit 88. The fluid supply conduit 100 is in fluid communication with a milk supply conduit 104 which is received in a bore formed in the lower portion 84 of the body 80. The fluid supply conduit 100 and the milk supply conduit 104 together form a conduit arrangement for conveying milk and air to the foaming chamber 86. The milk supply conduit 104 has a milk inlet 106 for receiving milk, an air inlet 108 for receiving air for the external environment, and a fluid outlet 110 for supplying a mixture of air and milk to the fluid supply conduit 100. The fluid inlet 106 and the fluid outlet 110 are located at opposite ends of the milk supply conduit 104, with the air inlet 108 being located in the wall of the milk supply conduit 104, preferably around midway between the fluid inlet 106 and the fluid outlet 110.

The foaming device 74 also comprises a milk supply nozzle 112 located about the lower portion of the milk supply conduit 104. The nozzle 112 extends downwardly from the body 80 for insertion into milk located in a milk container 52 positioned beneath the foaming device 74. The upper portion of the milk supply conduit 104 is preferably shaped so as to be substantially flush with the outer surface of the nozzle 112. The nozzle 112 is preferably formed from stainless steel.

The lower portion 84 of the body 80 comprises a foamed milk outlet 114 from which foamed milk is returned to the milk container 52. The foamed milk outlet 114 is located about the milk supply conduit 104, and is preferably substantially co-axial with the milk supply conduit 104 and the nozzle 112. The foamed milk outlet 114 comprises an annular upper portion 116 for receiving foamed milk from a foamed milk supply conduit 118 extending downwardly from the foaming chamber 86 and a lower portion 120. In this example, the lower portion 120 comprises a plurality of channels or slots spaced about and extending along the outer surface of part of the milk supply conduit 104. Each of the channels extends downwardly from the upper portion 116 to the bottom surface 122 of the lower portion 84 of the body 80.

The temperature of the milk entering the foaming chamber 86 is monitored by a temperature sensor 124. In this example the temperature sensor 124 may be located at the lower end of a bore 126 extending downwardly through the upper portion 82 of the body 80 and which terminates just above fluid supply conduit 100. Alternatively, this bore 126 may extend into the fluid supply conduit 100 so that the temperature sensor 124 is in contact with the milk passing through the fluid supply conduit 100.

The apparatus 50 further comprises a cleaning device 130 for cleaning the air inlet 108. The cleaning device 130 comprises a cleaning member in the form of a pin 132 which is moveable relative to the air inlet 108. The pin 132 has a relatively wide head 134, and a relatively narrow tip 136 which is partially located within the air inlet 108. The outer periphery of the tip 136 defines with the inner periphery of the air inlet 108 a narrow annular aperture through which air enters the milk supply conduit 104. The distance between the tip 136 and the air inlet 108 is exaggerated in Figure 6; in this example the diameter of the external periphery of the tip 136 of the pin 132 is around 2 mm whereas the diameter of the internal periphery of the air inlet 108 is around 2.1 mm.

The pin 132 is located within a cylindrical air duct 138 extending substantially orthogonally to the milk supply conduit 104. The pin 132 is shaped so that the head 134 of the pin 132 protrudes from the end of the duct 138 which is remote from the air inlet 108. The pin 132 is biased in direction extending away from the air inlet 108 by a resilient member 140 located within the air duct 138. The resilient member 140 is preferably in the form of a compression spring extending about the pin 132, and having one end engaging a flanged surface 142 extending partially about the base of the head 134 and another end engaging the wall 144 of the air duct 138 in which the air inlet 108 is located.

The housing 70 comprises means for moving the pin 132 relative to the air inlet 108 to dislodge matter, such as dirt or solidified milk, which may have accumulated within the annular aperture. In this example, the housing 70 comprises an abutment member 150 for engaging the head 134 of the pin 132 as the foaming device 74 is moved between the stowed position and the deployed position. The abutment member 150 preferably extends towards the front cover 72 of the housing 70, and is preferably aligned parallel with the pin 132. As illustrated in Figures 5 and 6, the abutment member 150 has a curved outer surface 152 for engaging a curved outer surface 154 of the head 134 of the pin 132 so that the pin 132 moves axially, that is along the longitudinal axis X-X of the pin 132, relative to the air inlet 108. The outer surfaces 152, 154 need not be curved, for example the surfaces may be angled, or wedge-shaped so that the head 134 of the pin 132 and the abutment member 150 are both either triangular or trapezoidal in cross-section.

In use, when the user requires milk to be foamed the user presses the appropriate button on the control panel 22 to cause the housing 70 to be moved from the stowed position to the deployed position. The user positions a milk container, containing milk to be foamed, beneath the foaming device 74 and, using the button 78, slides the foaming device 74 from its stowed position to its deployed position so that the end of the nozzle 112 is immersed within the milk in the container.

As the foaming device 74 is lowered towards its deployed position, the head 134 of the pin 132 contacts the abutment member 150. With further lowering of the foaming device 74, the curved outer surface 154 of the head 134 of the pin 132 slides over the curved outer surface 152 of the abutment member 150, which pushes the head 134 of the pin 132 from the position illustrated in Figure 6 gradually towards the air inlet 108 against the force of the resilient member 140. The tip 136 of the pin 132 thus moves relative to the air inlet 108 so as to cause deposits and other matter to be dislodged from the annular aperture located between the outer periphery of the tip 136 and the inner periphery of the air inlet 108. The extent of the movement of the pin 132 relative to the air inlet 108 is determined by the distance *x* along axis X-X between the end of the head 134 of the pin 132 and the end of the abutment member 150. In this example the distance *x* is in the range from 1 to 5 mm. Once the end of the head 134 of the pin 132 has been lowered beyond the end of the abutment member 150, the force of the resilient member 140 urges the pin 132 back towards the position illustrated in Figure 6. Again, the curved outer surfaces 152, 154 ensure that the pin 132 moves gradually back to the position illustrated in Figure 6 as the foaming device 74 is lowered.

Following the lowering of the foaming device 74 to the deployed position, the user presses an appropriate button of the control panel 22 to commence the milk foaming process. The controller 60 activates the heating element 40 so that the heating element 40 rises to a temperature at which it is able to heat water received from the water reservoir 24 to the second temperature, that is, to a temperature in the range from 120 to 140°C, to generate steam. The controller 60 may also issue a signal to the three-way valve 46 to cause the three-way valve 46 to move to a position at which water is diverted away from the brewing assembly 44 and into the steam inlet conduit 94. However, if this position is the default position of the three-way valve 46 then no such signal needs to be issued by the controller 60.

Once the heating element 40 has reached the required temperature, the controller 60 activates the pump 38 to draw water from the water reservoir 24. The water is pumped through the heater element 40, wherein it is converted into steam. The pressurised steam is diverted into the steam inlet conduit 94 by the three-way valve 46, and is conveyed thereby into the tube located within the chamber 92 of the housing 70. The pressurised steam is forced into the steam supply conduit 88, wherein it passes through the constricted portion 90 of the steam supply conduit 88 and is ejected into the foaming chamber 86. The increase in the velocity of the steam as it passes through the constricted portion 90 of the steam supply conduit 88 generates a reduced pressure, or partial vacuum, within the foaming chamber 86 due to the steam collapsing and forming vapour as it enters the foaming chamber 86. This reduced pressure causes milk to be drawn up the nozzle 112 from the milk container, and air to be sucked through the air inlet 108 from the external environment. The milk and air mixes within the milk supply conduit 104, resulting in a mixture of milk and air being drawn along the fluid supply conduit 100 from the milk supply conduit 104 and entering the foaming chamber 86, wherein the steam heats the air and milk to form heated, foamed milk having a temperature in the range from 50 to 70°C.

The foamed milk is forced from the foaming chamber 86 and into the foamed milk supply conduit 118, which conveys the foamed milk to the annular upper portion 116 of the foamed milk outlet 114. The foamed milk enters the plurality of slots forming the lower portion 120 of the foamed milk outlet 114, within which the foamed milk flows downward along the external periphery of the milk supply conduit 104. The foamed milk leaves the foaming device 74 from the ends of the slots, and continues to flow downward along the outer surface of the nozzle 112 to the milk container.

The slots thus produce a relatively smooth flow of foamed milk which passes downward along the outer surface of the nozzle 112 to the milk container.

As a consequence of the, relatively warm, foamed milk returning to the milk container from which, relatively cold, milk is supplied to the foaming chamber 86, the temperature of the milk within the milk container, and thus the temperature of the milk entering the foaming chamber 86, will increase as the foaming process continues. During the foaming process, the controller 60 receives signals from the thermistor 124 located within the fluid supply conduit 100 which are indicative of the temperature of the milk passing through the fluid supply conduit 100. When the temperature of milk passing through the fluid supply conduit 100 reaches a set value, which may be in the range from 50 to 70°C, the controller 60 stops the pump 38. This terminates the supply of steam to the foaming device 74, which in turn terminates the drawing of milk from the milk container to the foaming device 74.

Using the button 78, the user slides the foaming device 74 back to its stowed position in the housing 70. As the foaming device 74 moves upward relative to the housing 70, the head 134 of the pin 132 again contacts the abutment member 150. With further raising of the foaming device 74, the curved outer surface 154 of the head 134 of the pin 132 slides over the curved outer surface 152 of the abutment member 150, which pushes the head 134 of the pin 132 from the position illustrated in Figure 6 gradually towards the air inlet 108 against the force of the resilient member 140. The tip 136 of the pin 132 thus moves relative to the air inlet 108 so as to dislodge deposits, such as solidified milk and airborne dirt particles drawn into the air duct 138 during the foaming process, from the annular aperture located between the outer periphery of the tip 136 and the inner periphery of the air inlet 108. Once the end of the head 134 of the pin 132 has been raised beyond the end of the abutment member 150, the force of the resilient member 140 urges the pin 132 back towards the position illustrated in Figure 6. Again, the curved outer surfaces 152, 154 ensure that the pin 132 moves gradually back to the position illustrated in Figure 6 as the foaming device 74 is raised. Once the foaming device 74 has been raised to the stowed position, the user may push the housing 70 back to its stowed position within the casing 12 for storage.

## Claims

1. Apparatus for foaming milk, comprising a body defining a foaming chamber, a nozzle insertable into milk located in a milk container, a conduit arrangement for conveying milk to the foaming chamber from the nozzle, means for drawing milk through the conduit arrangement to the foaming chamber, a foamed milk outlet configured to return foamed milk to the container, a temperature sensor for monitoring the temperature of milk being supplied to the foaming chamber, and a controller arranged to terminate the drawing of milk along the nozzle depending on the monitored temperature.

2. Apparatus as claimed in claim 1, wherein the temperature sensor is arranged to contact milk being drawn through the conduit arrangement.

3. Apparatus as claimed in claim 1 or claim 2, wherein the temperature sensor comprises a thermistor located within the body.

4. Apparatus as claimed in any of the preceding claims, wherein the controller is configured to terminate the drawing of milk through the conduit arrangement when the monitored temperature is in the range from 50 to 70°C.

5. Apparatus as claimed in any of the preceding claims, wherein the foamed milk outlet is substantially co-axial with the nozzle.

6. Apparatus as claimed in any of the preceding claims, wherein the foamed milk outlet is configured to return foamed milk to the container over the external periphery of the nozzle

7. Apparatus as claimed in any of the preceding claims, wherein the foamed milk outlet comprises a plurality of channels radially spaced from and extending along the conduit arrangement.

8. Apparatus as claimed in any of the preceding claims, wherein the foamed milk outlet comprises an annular channel for receiving foamed milk from the foaming chamber.

9. Apparatus as claimed in any of the preceding claims, wherein the body comprises an upper portion, and a lower portion releasably retained by the upper portion and comprising the foamed milk outlet.

10. Apparatus as claimed in claim 9, wherein the conduit arrangement comprises a milk supply conduit releasably retained by the lower portion of the body.

11. Apparatus as claimed in claim 9 or claim 10, wherein the lower portion of the body is formed from flexible material.

12. Apparatus as claimed in any of claims 9 to 11, wherein the foaming chamber is delimited by the upper portion and the lower portion of the body.

13. Apparatus as claimed in any of the preceding claims, wherein the means for drawing milk through the conduit arrangement to the foaming chamber comprises a steam supply conduit for supplying steam to the foaming chamber.

14. Apparatus as claimed in any of the preceding claims, wherein the conduit arrangement comprises an air inlet.

15. Apparatus as claimed in claim 14, wherein the air inlet is located beneath the foamed milk outlet.

16. Apparatus as claimed in any of the preceding claims, wherein the body is moveable between a stowed position and a deployed position to insert the nozzle within milk located in a milk container

17. A domestic appliance comprising apparatus as claimed in any of the preceding claims.

18. A method of foaming milk, comprising inserting a nozzle of a milk supply conduit into milk located in a milk container, drawing milk from the container and conveying the drawn milk to a foaming chamber, returning foamed milk to the container from the foaming chamber, monitoring the temperature of milk being supplied to the foaming chamber, and terminating the drawing of milk along the milk supply conduit depending on the monitored temperature.
